Europäisches Patentamt

European Patent Office

Office européen des brevets

(11) Veröffentlichungsnummer: **0 094 609**

A1

(12) **EUROPÄISCHE PATENTANMELDUNG**

(21) Anmeldenummer: 83104631.3

(22) Anmeldetag: 11.05.83

(51) Int. Cl.³: **H 02 K 23/04**
**H 02 K 1/06**

(30) Priorität: 14.05.82 DE 3218239

(43) Veröffentlichungstag der Anmeldung:
23.11.83 Patentblatt 83/47

(84) Benannte Vertragsstaaten:
CH DE FR GB IT LI

(71) Anmelder: International Standard Electric Corporation
320 Park Avenue
New York New York 10022(US)

(84) Benannte Vertragsstaaten:
CH FR GB IT LI

(71) Anmelder: Standard Elektrik Lorenz Aktiengesellschaft
Hellmuth-Hirth-Strasse 42
D-7000 Stuttgart 40(DE)

(84) Benannte Vertragsstaaten:
DE

(72) Erfinder: Eichhorn, Winfried
Brächterstrasse 28
D-7146 Tamm(DE)

(72) Erfinder: Eclercy, Kurt
Papiererstrasse 34
D-8300 Landshut(DE)

(74) Vertreter: Pohl, Heribert, Dipl.-Ing et al,
Standard Elektrik Lorenz AG Patent- und Lizenzwesen
Kurze Strasse 8 Postfach 300 929
D-7000 Stuttgart 30(DE)

(54) Gleichstrommaschine.

(57) Die Erfindung betrifft eine Gleichstrommaschine mit im Statorgehäuse (1) angeordneten Permanentmagneten, die als Schalen (2, 3) ausgebildet sind. Jede einzelne Schale (2, 3) einer Polausbildung besteht aus mehreren in Achsrichtung hintereinander liegenden ringförmigen Segmenten (4, 5 und 6 oder 4', 5' und 6'), die radial zueinander versetzt angeordnet sind. Der Versatz der einzelnen Segmente (4, 5 und 6 oder 4', 5' und 6') einer Polausbildung kann in axialer Richtung gestaffelt sein. Die benachbarten ringförmigen Segmente der nächsten Polausbildung sind im gleichen Sinn gestaffelt, so daß die Erregerflußfläche zwischen den Polen verkleinert und dadurch die Polfühligkeit beim Drehen des Rotors im Stator vermindert wird.

Fig.1

W. Eichhorn - K. Eclercy 3 - 1

## Gleichstrommaschine

Die Erfindung betrifft eine Gleichstrommaschine mit im Statorgehäuse angeordneten Permanentmagneten, die als ringförmige Schalen ausgebildet sind.

Solche Gleichstrommaschinen sind beispielsweise durch die DE-OS 25 58 958 bekannt, bei denen durch eine V-förmige Schrägung der Enden der im Statorgehäuse als ringförmige Schalen ausgebildeten Permanentmagnete eine Verkleinerung der Erregerflußfläche zu den Polenden hin erreicht wird, was bewirkt, daß das magnetische Feld beim Drehen des Rotors im Statorgehäuse nicht hart abreißt, sondern kontinuierlich in die neutralen Zonen zwischen den Polen übergeht.

Bei entsprechender Ausbildung zwischen den Schrägungen der im Statorgehäuse radial hintereinander angeordneten ringförmig ausgebildeten Permanentmagnete wird zwar eine verminderte Polfühligkeit und dadurch eine geringere Leitwertschwankung als bei ringförmig ausgebildeten Permanentmagneten ohne diese Schrägungen erreicht, jedoch ist die Herstellung dieser Schrägungen an den Enden der ringförmigen

W. Eichhorn - K. Eclercy 3 - 1

Permanentmagnete und die Befestigung der so ausgebildeten Schalen im Statorgehäuse wirtschaftlich sehr aufwendig und teuer.

Der Erfindung liegt die Aufgabe zugrunde eine Gleichstrommaschine mit im Statorgehäuse angeordneten Permanentmagneten zu schaffen, bei der die Polfühligkeit vermindert ist und deren permanentmagnetische Schalen fertigungsfreundlich und wirtschaftlich billig herzustellen sind.

Diese Aufgabe wird erfindungsgemäß durch die im Anspruch 1 angegebenen Maßnahmen gelöst.

Dadurch entsteht beim Betreiben der Gleichstrommaschine der große Vorteil, daß die Polfühligkeit und damit die Leitwertschwankungen auf einfache und fertigungsfreundliche Weise vermindert werden.

Vorteilhafte Weiterbildungen sind in den Unteransprüchen enthalten.

Durch den Versatz zwischen den ringförmig ausgebildeten Segmente einer Polausbildung bzw. die Staffelung zwischen den einzelnen Segmenten wird die Erregerflußfläche zwischen den Polen verkleinert.

Die Erfindung ist nachstehend in den Zeichnungen anhand von Ausführungsbeispielen erläutert. In den Zeichnungen zeigt :

Fig.1    ein Statorgehäuse einer Gleichstrommaschine in Sicht auf die im Gehäuse angeordneten ringförmigen Segmente, perspektivisch dargestellt,

W. Eichhorn - K. Eclercy 3 - 1

Fig.2    eine Polausbildung, bestehend aus zwei untereinander versetzten ringförmigen Segmenten und
         einen Ausschnitt von den im Abstand des Maßes
         a folgenden ringförmigen Segmenten des Gegen-
         poles, in schematischer Darstellung, perspek-
         tivisch gezeichnet,

Fig.3    eine Polausbildung, bestehend aus drei untereinander versetzten ringförmigen Segmenten, in
         der Darstellung nach Fig. 2,

Fig.4 +

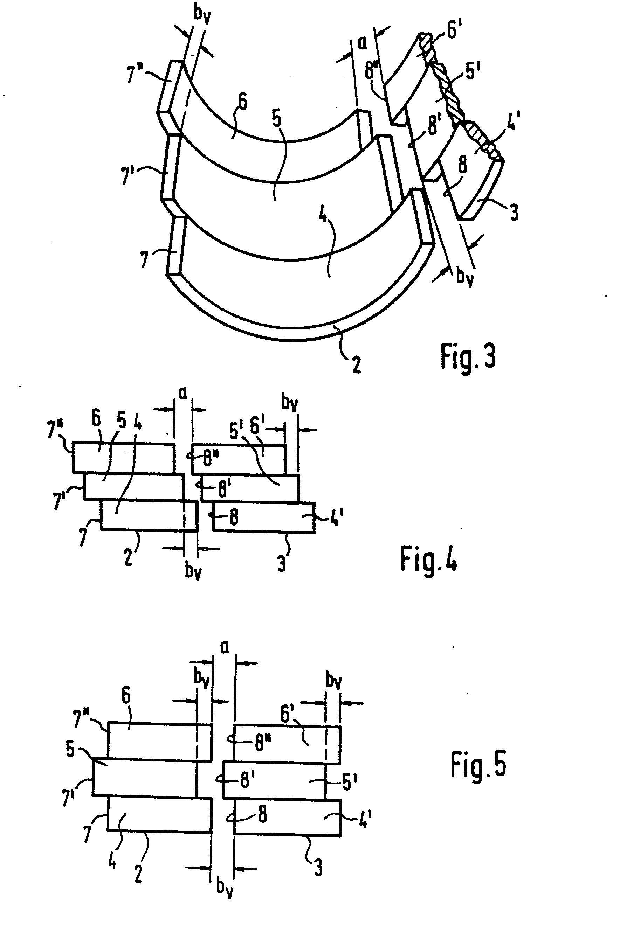

Fig.5    je eine Prinzipdarstellung von einer Ausbil-
         dung des Poles und des Gegenpoles mit je drei
         ringförmigen Segmenten, die untereinander in
         der axialen Ebene gestaffelt sind, in der Abwicklung dargestellt.

Fig. 6   ein Diagramm, aus dem der Einfluß des Ver-
         satzes $b_v$ zwischen zwei radial nebeneinander
         und in Achsrichtung hintereinander angeordneten ringförmigen Segmenten auf die Polfühligkeit hervorgeht, dargestellt in zwei Meßpunkten.

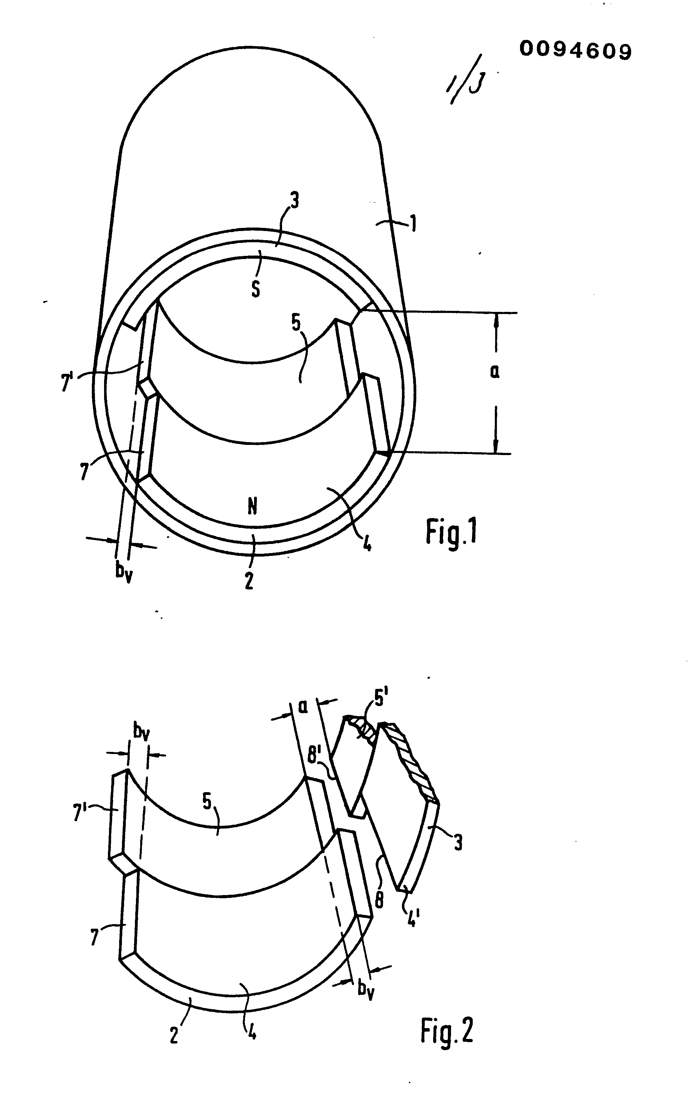

In Fig. 1 ist ein Statorgehäuse 1 einer Gleichstrommaschine in perspektivischer Ansicht dargestellt. In
dem Statorgehäuse 1 sind entsprechend der Polausbildung an mindestens zwei Stellen permanentmagnetische
Schalen 2 und 3 angeordnet, die die Nord- bzw.Südpole
bilden. Die permanentmagnetische Schale 2 ist unterteilt in ringförmige Segmente 4 und 5 und die permanentmagnetische Schale 3 ist unterteilt in die ringförmigen Segmente 4' und 5' (in der Darstellung

./.

4        0094609

W. Eichhorn - K. Eclercy 3-1

nach Fig. 1 nicht sichtbar), die in Achsrichtung des Statorgehäuses 1 hintereinander liegen.

Die permanentmagnetischen Schalen 2 und 3 bzw. die diese bildenden ringförmigen Segmente 4 und 5 bzw. 4' und 5' können mittels eines im Statorgehäuse 1 verdrehsicher angeordneten zylindrisch gebogenen Bleches mit aus der Blechebene herausgebogenen Laschen oder auf andere Weise im Statorgehäuse 1 befestigt sein.

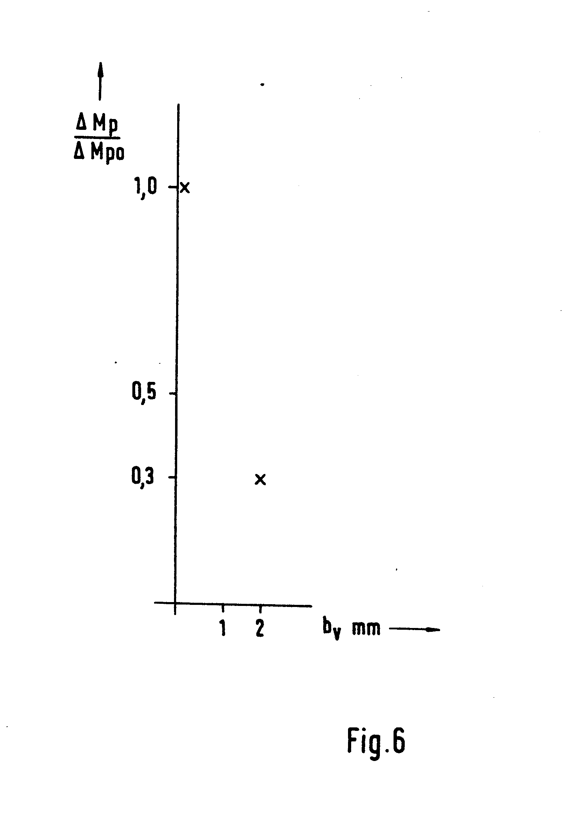

Innerhalb einer permanentmagnetischen Schale 2 oder 3 sind die Stirnseiten 7 und 7' bzw. 8 und 8' (Fig. 2) der ringförmigen Segmente 4 und 5 bzw. 4' und 5' untereinander um das Maß $b_v$ versetzt.

In Fig. 2 ist das Statorgehäuse 1 weggelassen und nur die eine permagnentmagnetische Schale 2 bildenden ringförmigen Segmente 4 und 5 und ein Ausschnitt der die permagnentmagnetische Schale 3 bildenden ringförmigen Segmente 4' und 5' dargestellt, deren Stirnkanten 7 und 7' bzw. 8 und 8' untereinander um das Maß $b_v$ versetzt sind. Der Abstand in radialer Richtung zwischen dem ringförmigen Segment 4 oder 5 der einen permanentmagnetischen Schale 2 und dem ringförmigen Segment 4' oder 5' der anderen permanentmagnetischen Schale 3 ist mit a angegeben. Der Abstand a zwischen zwei in radialer Richtung benachbarten ringförmigen Segmenten, z.B. 4 und 4' oder 5 und 5' oder 6 und 6' (Fig. 4 und 5), ist immer gleich und entspricht dem üblichen Abstand zwischen zwei Polausbildungen.

Durch den Versatz $b_v$ der ringförmigen Segmente 4 und 5 einer Polausbildung untereinander wird die effektive

./.

W. Eichhorn - K. Eclercy 3-1

Erregerflußfläche zwischen den ringförmigen Segmenten
4, 5 und 4' 5' zweier benachbarter Polausbildungen
verkleinert, so daß im Betrieb der Gleichstrommaschine, d.h. mit in das Statorgehäuse 1 eingesetztem Rotor
(nicht dargestellt), die Leitwertschwankungen damit
verringert werden.

Wie in Fig. 3 dargestellt, können die permanentmagnetischen Schalen 2 und 3 auch aus mehreren (im dargestellten Beispiel drei) ringförmigen Segmenten 4, 5
und 6 bzw. 4', 5' und 6' bestehen. Die zu einer Polausbildung gehörenden ringförmigen Segmente 4, 5 und 6
bzw. 4', 5' und 6' sind um das Maß $b_v$ untereinander
versetzt. Zwischen dem ringförmigen Segment 4, 5 oder
6 der permanentmagnetischen Schale 2 und dem in radialer Richtung benachbarten ringförmigen Segment 4', 5'
oder 6' der permanentmagnetischen Schale 3 besteht jeweils der Abstand a.

In Fig. 4 ist die Anordnung der ringförmigen Segmente
4, 5, 6, 4', 5' und 6' der Schalen 2 und 3, wie in
Fig. 3 perspektivisch dargestellt, in einer Abwicklung
gezeichnet. Die einzelnen ringförmigen Segmente 4, 5
und 6 der Schale 2 sind um den Versatz $b_v$ ansteigend
und die diesen gegenüberliegenden ringförmigen Segmente 4', 5' und 6' der Schale 3 sind im Abstand a in
derselben Richtung abfallend gestaffelt. Die Staffelung der einzelnen Segmente 4, 5 und 6 bzw. 4', 5'
und 6' innerhalb der beiden Schalen 2 und 3 kann auch
umgekehrt sein, d.h. die Segmente 4, 5 und 6 der Schale 2 sind um den Versatz $b_v$ abfallend gestaffelt und
die Segmente 4', 5' und 6'der Schale 3 sind in derselben Richtung ansteigend gestaffelt.

W. Eichhorn - K. Eclercy 3-1

In Fig. 5 ist eine intermittierende Staffelung der in einer Abwicklung gezeichneten ringförmigen Segmente 4, 5 und 6 der Schale 2 bzw. der ringförmigen Segmente 4', 5' und 6' der Schale 3 dargestellt, die den mit der Erfindung erreichbaren technischen Fortschritt gegenüber dem Stand der Technik deutlich erkennen lassen. Die einzelnen ringförmigen Segmente 4, 5, 6, 4', 5' und 6' sind in ihren äußeren Konturen rechteckig ausgebildet und lassen sich fertigungsmäßig einfach herstellen. Eine Abschrägung innerhalb der Segmente einer Polausbildung und damit eine Verringerung der Erregerflußfläche zu den abgeschrägten Segmenten der benachbart liegenden Polausbildung lässt sich leicht durch die um das Maß $b_v$ gestaffelte Anordnung bzw. Befestigung der einzelnen Segmente im Statorgehäuse 1 erreichen, ohne daß die Schalen 2 und 3 selbst aufwendiger herstellbare abgeschrägte Außenkonturen aufweisen müssen.

Der sich am günstigsten auswirkende Versatz $b_v$ zwischen den einzelnen ringförmigen Segmenten einer Polausbildung kann empirisch gemessen werden und der dabei gefundene Wert für den Versatz $b_v$ geht in die Fertigungsunterlagen ein. In Fig. 6 ist ein Diagramm gezeichnet, in dem die Abhängigkeit des Verhältnisses $\dfrac{\Delta M_p}{\Delta M_{po}}$ der Polfühligkeit von dem Versatz $b_v$ zwischen zwei ringförmigen Segmenten beispielsweise anhand von zwei Meßpunkten dargestellt ist. Bei einem Versatz $b_v = 0$ ergibt dies ein Verhältnis von $\dfrac{\Delta M_p}{\Delta M_{po}} = 1,0$ und bei einem Versatz von $b_v = 2$ mm ergibt dies ein Verhältnis von $\dfrac{\Delta M_p}{\Delta M_{po}} = 0,3$. Eine Kurvendarstellung des Verhältnisses $\dfrac{\Delta M_p}{\Delta M_{po}}$ in Abhängigkeit von $b_v$ verläuft nicht linear und bei größer werdenden $b_v$ verläuft die Meßkurve für $\dfrac{\Delta M_p}{\Delta M_{po}}$ auch nicht nach Null gehend, sondern in dem Kurven-

0094609

W. Eichhorn - K. Eclercy 3-1

verlauf sind Minima und Maxima enthalten. Aus diesem Grund sind aus dem Gesamtkurvenverlauf auch nur zwei Meßpunkte herausgegriffen, die sich bei Werten von $b_V = 0$ und $b_V = 2$ mm ergeben.

0094609

W. Eichhorn - K. Eclercy 3-1

<u>Bezugszeichen</u> :

| | |
|---|---|
| 1 | Statorgehäuse |
| 2 | Schale |
| 3 | Schale |
| 4 | Segment |
| 4' | Segment |
| 5 | Segment |
| 5' | Segment |
| 6 | Segment |
| 6' | Segment |
| 7 | Stirnkante |
| 7' | Stirnkante |
| 8 | Stirnkante |
| 8' | Stinkante |
| $b_v$ | Versatz |

0094609

W. Eichhorn - K. Eclercy 3 - 1

Patentansprüche

1. Gleichstrommaschine mit im Statorgehäuse angeordneten Permanentmagneten, die als Schalen ausgebildet sind, d a d u r c h  g e k e n n z e i c h n e t, daß eine Schale (2 oder 3) aus permanentmagnetischen Material aus mindestens zwei ringförmigen Segmenten (4, 5, oder 4', 5') besteht, die in Achsrichtung des Statorgehäuses (1) hintereinander liegend angeordnet und radial zueinander versetzt sind (Maß $b_v$).

2. Gleichstrommaschine nach Anspruch 1, dadurch gekennzeichnet, daß die in Achsrichtung im Statorgehäuse (1) hintereinander liegend angeordneten ringförmigen Segmente (4, 5 oder 4', 5') einer permanentmagnetischen Schale (2 und 3) stufenförmig (Maß $b_v$) gestaffelt sind.

3. Gleichstrommaschine nach Anspruch 2, dadurch gekennzeichnet, daß die stufenförmige Staffelung (Maß $b_v$) in Achsrichtung des Statorgehäuses (1) ansteigend oder abfallend ausgebildet ist.

ZT/P,  Kre/-  ,27.04.1982                    ./.

0094609

W. Eichhorn - K.Eclercy 3 - 1

4. Gleichstrommaschine nach einem der Ansprüche 1 oder 2, dadurch gekennzeichnet, daß der Abstand (Maß a) zwischen zwei ringförmig ausgebildeten Segmenten (4, 4') innerhalb einer radialen Ebene in dem Statorgehäuse (1) gleich ist wie der Abstand (Maß a) zwischen zwei ringförmig ausgebildeten Segmenten (5, 5') der in Achsrichtung benachbarten radialen Ebene.

5. Gleichstrommaschine nach einem der Ansprüche 1 oder 2, dadurch gekennzeichnet, daß der Versatz (Maß $b_v$) bzw. die stufenförmige Staffelung der ringförmigen Segmente (4, 5, 6, 4', 5', 6') innerhalb der einzelnen radialen Ebenen einer Polung gleich groß ausgebildet ist.

6. Gleichstrommaschine nach einem der Ansprüche 1 bis 5, dadurch gekennzeichnet, daß die den einen Pol (z.B. N) bildenden ringförmigen Segmente (4, 5 und 6) in Achsrichtung des Statorgehäuses (1) ansteigend gestaffelt sind und die den anderen Pol (S) bildenden ringförmigen Segmente (4', 5' und 6') in derselben Richtung abfallend gestaffelt sind oder umgekehrt.

Fig.1

Fig.2

W. Eichhorn 3-1
12. 4. 83

0094609

J/3

Fig.6

W.Eichhorn 3-1
12. 4. 83

Fig.3

Fig.4

Fig.5

W. Eichhorn 3-1
12. 4. 83

Europäisches
Patentamt

**EUROPÄISCHER RECHERCHENBERICHT**

**0094609**
Nummer der Anmeldung

EP 83 10 4631

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-U-7 012 818 (LICENTIA PATENT-VERWALTUNGS-GMBH) * Anspruch 1; Figur * | 1 | H 02 K 23/04 H 02 K 1/06 |
| A | Patent Abstracts of Japan Band 3, Nr. 9, 26. Januar 1979 Seite 76E86 & JP-A-53-136609 | 1 | |
| D,A | DE-A-2 558 958 (SIEMENS AG) * Seite 2; Figuren 1-3 * | 1 | |

RECHERCHIERTE
SACHGEBIETE (Int. Cl. ³)

H 02 K 1/00
H 02 K 21/00
H 02 K 23/00

Der vorliegende Recherchenbericht wurde für alle Patentansprüche erstellt.

| Recherchenort BERLIN | Abschlußdatum der Recherche 10-08-1983 | Prüfer FAORO G |
|---|---|---|